# EUROPÄISCHE PATENTSCHRIFT

(11) **EP 1 853 462 B1**
(45) Veröffentlichungstag und Bekanntmachung des Hinweises auf die Patenterteilung: **06.05.2009**
(21) Anmeldenummer: 06707262.9
(22) Anmeldetag: 24.02.2006
(51) Int. Cl.: B60R 1/12, B60H 1/00

(54) **SENSORANORDNUNG IM KFZ-AUSSENSPIEGEL**
SENSOR ASSEMBLY SITUATED IN A WING MIRROR OF A MOTOR VEHICLE
DISPOSITIF DE DETECTION DANS UN RETROVISEUR EXTERIEUR DE VEHICULE

(30) Priorität: 01.03.2005 DE 102005009120
(43) Veröffentlichungstag der Anmeldung: 14.11.2007
(73) Patentinhaber: Preh GmbH, 97616 Bad Neustadt a.d. Saale (DE)
(72) Erfinder: KUECHLER, Wolfgang, 97645 Ostheim (DE)
(74) Vertreter: Bauer, Wulf
(86) Internationale Anmeldenummer: PCT/EP2006/001726
(87) Internationale Veröffentlichungsnummer: WO 2006/092243

(56) Entgegenhaltungen:
- DE-A1- 10 221 129
- US-A- 5 555 136
- US-A- 5 659 423
- US-A1- 2004 099 786
- US-A1- 2004 121 820

## Beschreibung

Die vorliegende Erfindung betrifft eine Sensoranordnung mit einem oder mehreren Sonnensensoren in einem Kraftfahrzeug, wobei die Sensoranordnung im Bereich der äußeren Oberfläche des Kraftfahrzeugs eingesetzt ist.

In Kraftfahrzeugen ist es oftmals gewünscht, die Richtung und die Intensität der einfallenden Sonneneinstrahlung zu ermitteln. Anhand dieser Informationen lässt sich besonders gut eine mehrzonige Klimaanlage regeln, die in der Lage ist verschiedene Innenraumbereiche eines Kraftfahrzeugs individuell zu klimatisieren.

Aus der DE 195 44 893 C2 ist eine in vier Quadranten aufgeteilte Sonnensensor-Anordnung bekannt. Die Sonneneinstrahlungssensorik besteht aus einem in vier Quadranten aufgeteilten Sensor, der in jedem Quadranten ein separates Sensorelement zur Erfassung der im zugehörigen Raumwinkelbereich einfallenden Sonneneinstrahlung aufweist. Der Sensor ist dabei im Dachbereich angeordnet. Eine derartige Anordnung weist jedoch den Nachteil auf, dass das Fahrzeugdach mit einem Loch versehen werden muss, was einerseits zu einer leichten Beschädigung des Sensors führen kann und andererseits erhöhten Aufwand zum Abdichten der Ausnehmung verursacht. Außerdem ist eine Anordnung des Sensors im Dachbereich aus Designgründen nicht in jedem Fall wünschenswert.

Der Erfindung liegt daher die Aufgabe zu Grunde, eine Sensoranordnung anzugeben, mit der ein möglichst großer Raumwinkelbereich um das Kraftfahrzeug erfasst wird und der nur eine geringstmögliche Beeinflussung bei Konstruktion und Design des Kraftfahrzeugs verursacht. Darüber hinaus soll die Sensorik in der Lage sein, die Sonneneinfallsintensität auf das Kraftfahrzeug in Abhängigkeit von der Ausrichtung des Fahrzeugs zu erfassen und auszuwerten, ohne dass es bei der Auswertung zu Überschneidungen in den durch die Sensoren erfassten Raumwinkelbereiche kommt.

Gelöst wird diese Aufgabe durch eine Anordnung von mindestens einem Sonnensensor im Außenspiegel, gemäß den Merkmalen des Patentanspruchs 1.

Bei der erfindungsgemäßen Anordnung der Sonnensensoren ist mindestens ein Sonnensensor im Bereich mindestens eines Außenspiegels angebracht. Um den Sonnensensor im Bereich des Lichteinfalls der Sonne anzuordnen wird oder werden der Sonnensensor oder die Sonnensensoren bevorzugt im Bereich der äußeren Oberfläche des Außenspiegels eingesetzt. Aufgrund der Lage des Außenspiegels zur Fahrzeugkarosserie kann ein dort platzierter Sonnensensor zumindest eine Hälfte der Hemisphäre oberhalb einer Fahrzeugseite abdecken. Dabei bezeichnet Hemisphäre die Halbkugel oberhalb des Kraftfahrzeugs, aus der üblicherweise die direkte Sonneneinstrahlung auftrifft.

Ein weiterer Vorteil der Positionierung des Sonnensensors im Außenspiegel ergibt sich durch den durch das Fahrzeug erzeugten Schatten. Sonnenlicht aus einem Bereich auf der gegenüberliegenden Seite des Kraftfahrzeugs erreicht den Sonnensensor nicht, aber auf jeden Fall sehr eingeschränkt, wodurch sich eine bessere Richtungsintensität des einfallenden Sonnenlichtes auf den Sensor auch bei einem einfachen Aufbau ergibt. Zur Abdeckung der gesamten Hemisphäre oberhalb des Fahrzeugs ist in vorteilhafter Weise im Bereich zweier Außenspiegel an gegenüberliegenden Seiten des Kraftfahrzeugs jeweils ein Sonnensensor angebracht, wobei die Sensoranordnung bevorzugt im der Hemisphäre zugewandten oberen Teil des Außenspiegels angeordnet ist.

In einer weiteren vorteilhaften Ausgestaltungsform sind die Sonnensensoren 2-zonig ausgebildet. Besteht die erfindungsgemäße Sensoranordnung aus einem Sonnensensor, so lässt sich damit die Hemisphäre in zwei Quadranten unterteilen. Werden an zwei gegenüberliegenden Seiten des Kraftfahrzeugs zwei-zonige Sensoren eingesetzt, so ist es erfindungsgemäß möglich, die zu untersuchende Hemisphäre in vier Quadranten zu unterteilen. Diese Unterteilung in vier Bereiche oder Quadranten entspricht derjenigen bei hochwertigen Klimaanlagen, bei denen vier Bereiche im Innenraum des Kraftfahrzeugs - Fahrer, Beifahrer sowie linker und rechter Rücksitz - individuell klimatisierbar sind.

Es ist möglich, dass die Sonnensensoren jeweils in transparente Bereiche der Gehäuse der Außenspiegel eingelassen sind. Somit lassen sich die Sonnensensoren ohne negativen Einfluss auf die Designmöglichkeiten des Kraftfahrzeugs positionieren. Nutzbare transparente Bereiche sind beispielsweise diejenigen, die für bestehende Komponenten wie Fahrtrichtungsanzeiger vorgesehen sind.

Vorteilhafte Einbauorte für die Sensoranordnung innerhalb des Außenspiegels ist beispielsweise die der Fahrbahn abgewandte Oberseite des Außenspiegels oder eine vom Kraftfahrzeug wegweisende Seite.

Als zwei-zonig wird ein Sonnensensor bezeichnet, mit dem der zu untersuchende Raumbereich in zwei separat auswertbare Zonen unterteilt wird. Ein solcher Sensor besteht üblicherweise aus zwei einzelnen Sensoren, die beispielsweise aus Fotodioden bestehen.

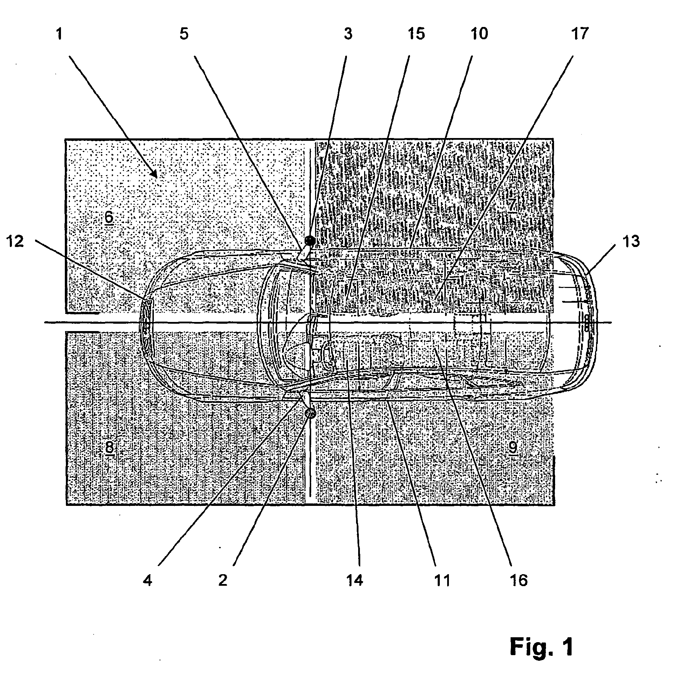

Die Erfindung wird nachfolgend anhand eines Ausführungsbeispiels näher erläutert. Dabei zeigt die einzige
- Figur 1: Die Draufsicht auf ein Kraftfahrzeug mit einer erfindungsgemäßen prinzipiellen Sensoranordnung.

Figur 1 zeigt ein Kraftfahrzeug 1 mit einer Sensoranordnung 2 im Außenspiegel 4 und einer Sensoranordnung 3 im Außenspiegel 5. Bei den Sensoranordnungen 2 und 3 handelt es sich um zwei-zonige Sonnensensoren, mit denen jeweils eine Unterteilung der Hemisphäre des abdeckbaren Raumbereichs 6, 7, 8, 9 in jeweils zwei Zonen 6 und 7 sowie 8 und 9 erfolgt. Es ist somit an jeder Kraftfahrzeugseite 10, 11 eine Messung in Richtung des vorderen 12 und hinteren 13 Kraftfahrzeugsbereichs möglich.

Durch diese Positionierung der Sonnensensoren 2, 3 ist die zu untersuchende Hemisphäre in vier Quadranten 6, 7, 8, 9 unterteilt. Der Sensoranordnung 3 im Außenspiegel 5 deckt die Quadranten 6 und 7 ab, der Sensoranordnung 2 im linken Außenspiegel 4 die Quadranten 8 und 9. Dies korrespondiert optimal zur Aufteilung des Innenraums des Kraftfahrzeugs in die Bereiche Fahrersitz 14, Beifahrersitz 15 und Fondsitze links 16 und rechts 17.

Die Sensoranordnung 2, 3 ist somit in der Lage, in Zusammenspiel mit einer in Kraftfahrzeug angeordneten Regelung einer Klimaanlage die einzelnen Bereiche 14, 15, 16 und 17 im Innenraum des Kraftfahrzeugs individuell zu klimatisieren. Unabhängig von dieser sehr detaillierten Aufteilung des Innenraums des Kraftfahrzeugs ist eine den Innenraum in zwei Bereiche, nämlich Fahrerseite 14, 16 und Beifahrerseite 15, 17 einteilende Klimaanlage sehr leicht regelbar. Durch eine intensive Sonneneinstrahlung auf die Fahrerseite 14, 16 des Kraftfahrzeugs 1, wobei zum Beispiel die Sensoranordnung 3 mit Schatten beaufschlagt würde, könnte die Klimaanlage die Fahrerseite 14, 16 stärker kühlen als die Beifahrerseite 15, 17, die keiner direkten Sonneneinstrahlung ausgesetzt ist.

Die Erfindung ist nicht auf die im Ausführungsbeispiel dargestellte Ausführungsform beschränkt. Insbesondere kann die Anzahl der Sonnensensoren 2, 3 sowie deren Position im Außenspiegel 3, 4 des Kraftfahrzeugs 1 variieren. Auch können andere als ein-/zwei-zonige Sonnensensoren, wie beispielsweise vier-zonige Sonnensensoren, verwendet werden.

Darüber hinaus ist es erfindungsgemäß ebenfalls vorstellbar, in die Sensoranordnung 2, 3, bestehend aus einem oder mehreren Sonnensensoren 2, 3, einer Leiterplatte mit elektronischen Elementen oder Aufnahmen mit elektrischen Anschlüssen sowie weitere Sensoren zu integrieren. Vorstellbar ist hier zum Beispiel die Integration eines Temperatursensors und/oder der Einsatz eines Umgebungslichtsensors in der Sensoranordnung 2; 3.

## Patentansprüche

1. Sensoranordnung mit mindestens einem Sonnensensor (2, 3) in einem Kraftfahrzeug (1), wobei der Sonnensensor (2, 3) im Bereich der äußeren Oberfläche des Kraftfahrzeugs (1) eingesetzt ist, **dadurch gekennzeichnet, dass** der Sonnensensor (2, 3} im Bereich mindestens eines Außenspiegels (4, 5) in einer der Fahrbahn abgewandten Oberseite und in einem einer Hemisphäre zugewandten oberen Teil des Außenspiegels (4, 5) angebracht ist, so dass zumindest eine Hälfte (6, 7, 8, 9) der Hemisphäre oberhalb einer Fahrzeugseite (10, 11) abgedeckt ist.

2. Sensoranordnung nach Anspruch 1, **dadurch gekennzeichnet, dass** der Sonnensensor (2, 3) in je einem, an den gegenüberliegenden Seiten (10, 11) des Kraftfahrzeuges (1) angeordneten Außenspiegel (4, 5) angebracht ist, so dass jede Seite (10,11) des Kraftfahrzeugs (1) mittels je eines Sonnensensors (2, 3) überwachbar ist.

3. Sensoranordnung nach einem der Ansprüche 1 oder 2, **dadurch gekennzeichnet, dass** der Sonnensensor (2, 3) zweizonig ausgebildet ist.

4. Sensoranordnung nach Anspruch 3, **dadurch gekennzeichnet, dass** die überwachbare Hemisphäre mittels der Sonnensensoren (2, 3) in vier Quadranten (6, 7, 8, 9) unterteilbar ist.

5. Sensoranordnung nach einem der Ansprüche 1 bis 4, **dadurch gekennzeichnet, dass** der Sonnensensor (2, 3) in transparente Bereiche der Gehäuse der Außenspiegel (4, 5) eingelassen ist.

6. Sensoranordnung nach einem der Ansprüche 1 bis 5, **dadurch gekennzeichnet dass** in der Sensoranordnung (2, 3) ein weiterer Sensor, insbesondere ein Temperatursensor und/oder ein Umgebungslichtsensor integriert ist. '

## Claims

1. A sensor array with at least one sun sensor (2, 3) in an automotive vehicle (1), said sun sensor (2, 3) being utilized in the region of the outer surface of said automotive vehicle (1), **characterized in that** said sun sensor (2, 3) is mounted in the region of at least one exterior mirror (4, 5) in an upper side turned away from the lane and in an upper part of said exterior mirror (4, 5), which is turned toward a hemisphere, so that at least one half (6, 7, 8, 9) of said hemisphere is covered above a vehicle side (10, 11).

2. The sensor array as set forth in claim 1, **characterized in that** the sun sensor (2, 3) is mounted in a respective exterior mirror (4, 5) disposed on the opposing sides (10, 11) of the automotive vehicle (1) so that each side (10, 11) of the automotive vehicle (1) may be monitored by means of a respective sun sensor (2, 3).

3. The sensor array as set forth in any one of the claims 1 or 2, **characterized in that** the sun sensor (2, 3) is configured to have two zones.

4. The sensor array as set forth in claim 3, **characterized in that** the hemisphere that may be monitored can be divided into four quadrants (6, 7, 8, 9) by means of the sun sensors (2, 3).

5. The sensor array as set forth in any one of the claims 1 through 4, **characterized in that** the sun sensor (2, 3) is embedded in transparent regions of the housings of the exterior mirrors (4, 5).

6. The sensor array as set forth in any one of the claims 1 through 5, **characterized in that** another sensor, in particular a temperature sensor and/or an ambient light sensor, is integrated in the sensor array (2, 3).

## Revendications

1. Montage de capteurs avec au moins un capteur solaire (2, 3) dans un véhicule automobile (1), le capteur solaire (2, 3) étant placé à la hauteur de la surface extérieure du véhicule automobile (1), **caractérisé en ce que** le capteur solaire (2, 3) est monté à la hauteur d'au moins un rétroviseur extérieur (4, 5) dans une face supérieure détournée de la chaussée et dans une partie haute du rétroviseur (4, 5) extérieur tournée vers une hémisphère de sorte qu'au moins une moitié (6, 7, 8, 9) de l'hémisphère est recouverte au-dessus d'un côté du véhicule (10, 11).

2. Montage de capteurs selon la revendication 1, **caractérisé en ce que** le capteur solaire (2, 3) est monté dans un rétroviseur extérieur (4, 5) respectif disposé sur les côtés opposés (10, 11) du véhicule automobile (1) de sorte que chaque côté (10, 11) du véhicule automobile (1) est apte à être surveillé au moyen d'un capteur solaire (2, 3) respectif.

3. Montage de capteurs selon l'une quelconque des revendications 1 ou 2, **caractérisé en ce que** le capteur solaire (2, 3) est un capteur solaire bizone.

4. Montage de capteurs selon la revendication 3, **caractérisé en ce que** l'hémisphère apte à être surveillée est apte à être divisée en quatre quadrants (6, 7, 8, 9) au moyen des capteurs solaires (2, 3).

5. Montage de capteurs selon l'une quelconque des revendications 1 à 4, **caractérisé en ce que** le capteur solaire (2, 3) est encastré dans des zones transparentes des boîtiers des rétroviseurs extérieurs (4, 5).

6. Montage de capteurs selon l'une quelconque des revendications 1 à 5, **caractérisé en ce qu'**un autre capteur, notamment un capteur de température et/ou un capteur de lumière ambiante, est intégré dans le montage de capteurs (2, 3).
